# EUROPEAN PATENT SPECIFICATION

(11) **EP 0 475 038 B1**
(45) Date of publication and mention of the grant of the patent: **11.10.1995**
(21) Application number: 91112486.5
(22) Date of filing: 25.07.1991
(51) Int. Cl.: C08L 71/12, C08L 77/00, C08L 81/02, C08K 3/00

(54) **Poly(phenylene sulfide) resin compositions**
Harzzusammensetzungen auf der Basis von Polyphenylensulfid
Compositions de résine à base de poly(sulfure de phénylène)

(30) Priority: 23.08.1990 JP 220076/90
(43) Date of publication of application: 18.03.1992
(73) Proprietor: GE PLASTICS JAPAN LIMITED, Chuo-ku Tokyo 103 (JP)
(72) Inventor: Kodaira, Tetsuji, Moka City, Tochigi Prefecture (JP); Ishida, Hiromi, Moka City, Tochigi Prefecture (JP); Kabaya, Hidekazu, Moka City, Tochigi Prefecture (JP)
(74) Representative: Pratt, Richard Wilson

(56) References cited:
- EP-A- 0 368 413
- EP-A- 0 412 572
- DATABASE WPIL, Week 9135, 30 October 1991, Derwent Publications Ltd., London (GB); AN 91-256221/35
- DATABASE WPIL, Week 8503, 13 March 1985, Derwent Publications Ltd., London (GB); AN 85-016279/03

## Description

The present invention relates to poly(phenylene sulfide) (hereinafter abbreviated PPS) resin compositions.

PPS resins have excellent heat resistance, flame retardance, chemical resistance, and stiffness, which make them extremely useful as engineering plastics, but they have the drawback of brittleness when subjected to impact. There have therefore been efforts to develop resin compositions which exhibit the desirable properties of poly(phenylene sulfides) while overcoming this drawback.

For example, compositions of poly(phenylene ethers) (hereinafter abbreviated PPE) and poly(phenylene sulfides), in which poly(phenylene sulfides) are added to improve the moldability and flame retardance of the poly(phenylene ethers), are described in Japanese Early Patent Disclosure Publication No. 50-156561.

Poly(phenylene ether) resin compositions containing both poly(phenylene sulfides) and polyamides are described in Japanese Early Patent Disclosure Publication No. 53-69255. These seek to overcome the brittleness of poly(phenylene sulfides).

In addition, blends of poly(phenylene sulfides) and poly(phenylene ethers) to which polyamides and epoxy resins are added in order to improve the compatibility of poly(phenylene sulfides) with poly(phenylene ethers) are described in Japanese Early Patent Disclosure Publication No. 59-213758.

Poly(phenylene sulfides) are sometimes compounded with poly(phenylene ethers) and polyamides in order to overcome their characteristic brittleness, but because poly(phenylene sulfides) and poly(phenylene ethers) have inherently poor compatibility, when these polymers are simply blended the resulting resin is brittle, and its appearance is not very good. When polyamide and epoxy resins are added to improve the compatibility of poly(phenylene sulfides) with poly(phenylene ethers), a reaction occurs between the epoxy resins, polyamides, and poly(phenylene sulfides), and this causes a problem in that the melt flow characteristics of the composition are not constant. When poly(phenylene sulfides) and polyamides are compounded they show poor compatibility, so there is little improvement of the brittleness of poly(phenylene sulfides), and an additional problem of phase separation tends to occur.

The present inventors have previously reported in Japanese Patent Application No. 1-41649 that if certain compounds such as citric acid are added to PPS/PPE/polyamide blends, the state of dispersion of the polymers can be enhanced, and as a result the appearance, toughness, and heat resistance of such PPS resin compositions can be improved. However, in such cases, new problems of distortion (blistering) occur at high temperatures, especially in applications such as connectors which are subjected to soldering at 250-280°C.

In Japanese Patent Application No. 1-43200 the present inventors reported that the impact resistance of PPS/PPE/polyamide resin compositions can be improved by adding unsaturated monomers and/or polymers having epoxy groups and/or oxazolinyl groups. However, the resulting resin compositions have the problem that their surfaces turn white when they are cleaned with trichloroethane or trichloroethylene.

The object of the present invention is thus to provide PPS/PPE/polyamide resin compositions with improved impact resistance, heat resistance, and appearance, which do not become distorted at high temperatures nor cloud up when their surfaces are cleaned with chlorinated solvents.

The present inventors have discovered that this object can be accomplished with compositions of poly(phenylene sulfides), poly(phenylene ethers), polyamides, compatibilizers, and inorganic fillers, provided that certain polyamides are used.

The present invention thus provides poly(phenylene sulfide) resin compositions consisting mainly of
(a) 40-90 wt% poly(phenylene sulfides),
(b) 5-55 wt% poly(phenylene ethers),
(c) 5-55 wt% polyamides,
(d) 0.01-10 wt. parts compatibilizers per 100 wt. parts of components (a), (b), and (c), and
(e) 5-150 wt. parts inorganic fillers per 100 wt. parts of components (a), (b), and (c),
in which the polyamides are copolymers of nylon 6 and nylon 12, and/or nylon 6/36.

The poly(phenylene sulfides) used in the present invention are preferably polymers comprising at least 70 mole% repeating units represented by the formula 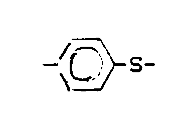
since these polymers give compositions with excellent properties. The poly(phenylene sulfides) may be prepared by polymerization of *p*-dichlorobenzene in the presence of sulfur and sodium carbonate, by polymerization of *p*-dichlorobenzene in a polar solvent in the presence of sodium sulfide, sodium hydrosulfide and sodium hydroxide, or hydrogen sulfide and sodium hydroxide, by condensation of *p*-chlorothiophenol, etc. A suitable method is the reaction of sodium sulfide with *p*-dichlorobenzene in an amide solvent such as *N*-methylpyrrolidone or dimethylacetamide, or a sulfone solvent such as sulfolane. Alkali hydroxides are preferably added, and the alkali metal salt of a carboxylic acid or sulfonic acid may be added to control the degree of polymerization. The polymer may also contain up to 30 mole%, preferably not more than 10 mole%, comonomers which form meta or ortho linkages 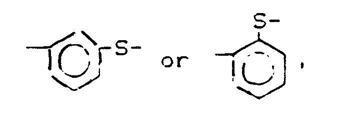
ether linkages 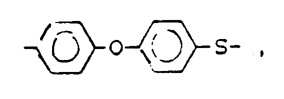
sulfone linkages 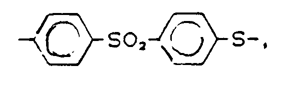
biphenyl linkages 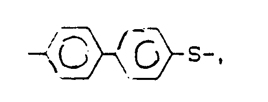
substituted phenylene sulfide linkages 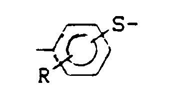
(where R rep resents an alkyl, nitro, phenyl, alkoxy, carboxy, or metal carboxylate group), or trifunctional phenylene sulfide linkages 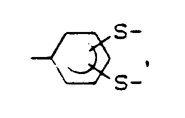
so long as these copolymerized components do not substantially affect the crystallinity of the polymer. When trifunctional or higher functional phenyl, biphenyl, or naphthyl sulfides are used for copolymerization, the comonomer content should be 3 mole% or less, preferably not more than 1 mole%.

Poly(phenylene sulfides) of this type can be synthesized by any of various methods, for example, (1) the reaction of a halogenated aromatic compound with an alkali sulfide (see U.S. Patent No. 2,513,188, Japanese Patent Publication No. 44-27671, Japanese Patent Publication No. 45-3368), (2) the condensation reaction of a thiophenol in the presence of an alkali catalyst or a copper salt (see U.S. Patent No. 3,274,165, U.K. Patent No. 1,160,660), or (3) the condensation reaction of an aromatic compound with sulfur chloride in the presence of a Lewis acid catalyst (see Japanese Patent Publication No. 46-27255, Belgian Patent No. 29437).

Poly(phenylene sulfides) are presently being marketed by Phillips Petroleum, Toso Sastil, Tohprene, and Kureha Chemical. There are various grades, with differing crosslink densities and viscosities. For the purposes of the present invention, poly(phenylene sulfides) with little crosslinking in their structure are preferred.

The poly(phenylene ethers) used as component (b) are polymers represented by general formula (A) 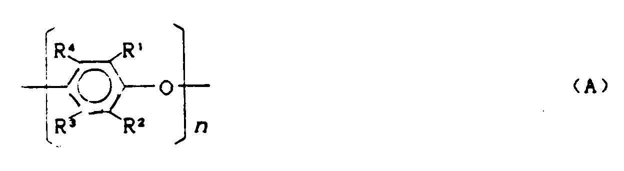
(where R¹, R², R³, and R⁴ are hydrogen atoms or monovalent substituents having no tertiary α carbons, selected from halogen atoms, alkyl groups, alkoxy groups, and haloalkyl or haloalkoxy groups having at least two carbons between the halogen atom and the phenyl ring; and *n* is an integer representing the degree of polymerization). They may be either homopolymers or copolymers combining two or more repeating units of this type. In preferred examples, R¹ and R² are C₁₋₄ alkyl groups, while R³ and R⁴ are hydrogen atoms or C₁₋₄ alkyl groups. Examples include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), and poly(2-ethyl-6-propyl-1,4-phenylene ether). PPE copolymers include poly(phenylene ethers) having repeating units like those above along with units derived from trialkyl phenols such as 2,3,6-trimethylphenol. They may also be copolymers formed by grafting styrenic monomers onto poly(phenylene ethers). Among the styrenic monomers which may be used to make styrene-grafted poly(phenylene ethers) are styrene, α-methylstyrene, vinyltoluene, and chlorostyrene.

The polyamides used as component (c) are copolymers of nylon 6 and nylon 12, and/or nylon 6/36. In this specification, the term "copolymers of nylon 6 and nylon 12" refers to copolymers formed from ε-caprolactam and ω-laurolactam or 12-aminododecanoic acid, which may be block or random copolymers. They preferably contain 0.02-50 moles of nylon 12 units per mole of nylon 6 units.

Resin compositions in accordance with the present invention contain poly(phenylene sulfides), poly(phenylene ethers), and polyamides in the following proportions. There should be 40-90 wt. parts (preferably 50-80 wt. parts) poly(phenylene sulfides), 5-55 wt. parts (preferably 10-40 wt. parts) poly(phenylene ethers), and 5-55 wt. parts (preferably 10-40 wt. parts) polyamides. If the composition contains less than 40 wt. parts poly(phenylene sulfides), it will not show the full stiffness, heat resistance, and flame retardance characteristic of PPS resins. If the poly(phenylene ether) content is less than 5 wt. parts, the properties of the composition will be significantly affected by moisture absorption by the polyamides, and the heat resistance and stiffness will be lowered. If the polyamide content is less than 5 wt. parts, the appearance of the material will be poor, and the brittleness of poly(phenylene sulfides) will not be sufficiently overcome.

In addition to the components described above, resin compositions in accordance with the present invention also contain compatibilizers (d). These may be any of the known agents for improving the compatibility of poly(phenylene sulfides) with poly(phenylene ethers) and polyamides. Preferred examples of such compatibilizers include
(a) citric acid, malic acid, agaricic acid, or derivatives thereof,
(b) compounds having both (i) carbon-carbon double or triple bonds, and (ii) carboxylic acid, acid anhydride, amide, imide, carboxylate ester, epoxy, amino, or hydroxy groups, and/or
(c) compounds having carboxylic acid or acid anhydride groups and acid halide groups.

The use of (a) citric acid, malic acid, agaricic acid, or derivatives thereof is described in Japanese Early Patent Disclosure Publication No. 61-502195. Any of the compounds represented by the general formula in that publication may be used in the present invention, although the compounds listed above are particularly preferred. The derivatives may be esters, amides, anhydrides, hydrates, or salts of these acids. Examples of esters include citric acid acetyl ester, and mono- and distearyl citrates. Examples of amides include *N*,*N*'-diethyl amides, *N*,*N*'-dipropyl amides, *n*-phenyl amides, *N*-dodecyl amides, and *N*,*N*'-didodecyl amides of citric acid, as well as *N*-dodecyl amides of malic acid. Examples of salts include calcium malate, calcium citrate, calcium malate [sic], and potassium citrate.

Compatibilizing agents of type (b) are described in Japanese Early Patent Disclosure Publication No. 56-49753. Examples include maleic anhydride, maleic acid, fumaric acid, maleimide, maleic acid hydrazide, reaction products of maleic acid with diamines, such as 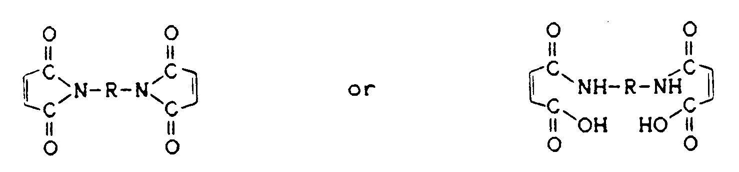
(where R represents an aliphatic or aromatic group), methylnadic anhydride, dichloromaleic anhydride, and maleamide, as well as natural oils such as soybean oil, tung oil, castor oil, linseed oil, hempseed oil, cottonseed oil, sesame oil, peanut oil, camellia oil, olive oil, palm oil, other vegetable oils, or sardine oil; epoxidized natural oils such as epoxidized soybean oil; unsaturated carboxylic acids such as acrylic acid, butenoic acid, crotonic acid, vinylacetic acid, methacrylic acid, pentenoic acid, angelic acid, tiglic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, docosenoic acid, erucic acid, tetracosenoic acid, mycolipenic acid, 2,4-pentadienoic acid, 2,4-hexadienoic acid, 2,4-dodecadienoic acid, 9,12-hexadecadienoic acid, 9,12-octadecadienoic acid, hexadecatrienoic acid, linolic acid, linoleic acid, octadecatrienoic acid, eicosadienoic acid, eicosatrienoic acid, eicosatetraenoic acid, ricinolic acid, eleostearic acid, oleic acid, eicosapentaenoic acid, ersinic acid, docosadienoic acid, docosatrienoic acid, docosatetraenoic acid, docosapentaenoic acid, tetracosenoic acid, hexacosenoic acid, hexacosadienoic acid, octacosenoic acid, and tetracosenoic acid; esters, amides, and anhydrides of such unsaturated carboxylic acids; unsaturated alcohols such as allyl alcohol, crotyl alcohol, methyl vinyl carbinol, allyl carbinol, methyl propenyl carbinol, 4-penten-1-ol, 10-undecen-1-ol, propargyl alcohol, 1,4-pentadiene-3-ol, 1,4-hexadiene-3-ol, 3,5-hexadiene-2-ol, 2,4-hexadiene-1-ol, alcohols represented by the general formulas CₙH₂ₙ₋₅OH, CₙH₂ₙ₋₇OH, or CₙH₂ₙ₋₉OH (where *n* is a positive integer), 3-butene-1,2-diol, 2,5-dimethyl-3-hexene-2,5-diol, 1,5-hexadiene-3,4-diol, and 2,6-octadiene-4,5-diol; unsaturated amines in which the OH groups of the above unsaturated alcohols are replaced with NH₂ groups; adducts of maleic anhydride or phenols with oligomeric polymers (e.g., average molecular weight of about 500 to 10,000) of compounds such as butadiene or isoprene; or similar polymers treated to introduce amino, carboxy, hydroxy, or epoxy groups. Compounds of type (b) may also contain two or more (i) groups and two or more (ii) groups (which may be identical or different).

As a particular example of a compound of type (c), trimellitic anhydride chloride is recited in Japanese Early Patent Disclosure Publication No. 62-50056.

Other examples of compatibilizers (d) include unsaturated monomers and/or polymers having epoxy groups and/or oxazolinyl groups.

Examples of unsaturated monomers having epoxy groups and/or oxazolinyl groups include the following.

Preferred unsaturated monomers having epoxy groups include glycidyl methacrylate (hereinafter abbreviated GMA), glycidyl acrylate, vinyl glycidyl ether, glycidyl ethers of hydroxyalkyl (meth)acrylates, poly(alkylene glycol) (meth)acrylate glycidyl ethers, and glycidyl itaconate.

Preferred unsaturated monomers having oxazolinyl groups are represented by the general formula 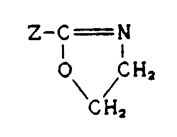
where Z is a group containing a polymerizable double bond. Preferred substituent groups Z are the following.
CH₂=CR-, 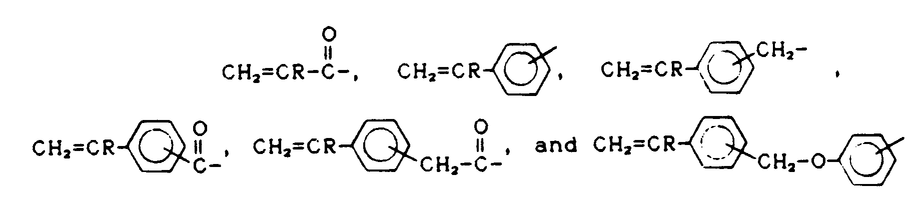
where R is a hydrogen atom or an alkyl or alkoxy group having 1 to 6 carbon atoms, such as a methyl, isopropyl, *n*-propyl, or butyl group.

Particularly preferred compounds are vinyl oxazolines represented by the general formula 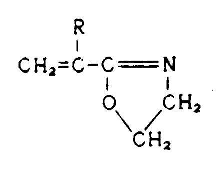
where R is as defined above, preferably a hydrogen atom or a methyl group.

Polymers having epoxy groups or oxazolinyl groups include homopolymers of such unsaturated monomers, copolymers of two or more such unsaturated monomers, and copolymers of such monomers with other unsaturated monomers, such as:
styrene (hereinafter abbreviated St) or other aromatic vinyl monomers;
acrylonitrile or other cyano vinyl monomers;
vinyl acetate, acrylic acid (salts), methacrylic acid (salts), acrylate esters, methacrylate esters, maleic acid (anhydride), maleate esters, 2-norbornene-5,6-dicarboxylic acid (anhydride), or other unsaturated carboxylic acids or derivatives thereof;
ethylene, propylene, 1-butene, 1-pentene, 4-methyl-1-pentene, 1-hexene, 1-octene, 1-decene, 1-tetradecene, 1-hexadecene, 1-octadecene, 1-eicosene, or other α-olefins; or
butadiene, isoprene, 1,4-hexadiene, 5-ethylidene-2-norbornene, 5-vinyl-2-norbornene, or other dienes.

Examples of copolymers thus include GMA/St, GMA/St/MMA (methyl methacrylate)/MA, GMA/St/acrylonitrile, GMA/MMA/acrylonitrile, GMA/MMA, GMA/MMA/St, vinyloxazoline/St, vinyloxazoline/MMA, ethylene/GMA, and ethylene/vinyl acetate/GMA. (Of course copolymers other than these may also be used in accordance with the present invention.)

The amount of compatibilizer used as component (d) is generally in the range of 0.01 to 10 wt. parts (preferably 0.1 to 3 wt. parts) per 100 wt. parts of (a) poly(phenylene sulfides), (b) poly(phenylene ethers), and (c) polyamides. If less than this amount is used, the intended effect will not be obtained, while if more than this is used, the heat resistance of products fabricated from the composition will be greatly reduced.

Resin compositions in accordance with the present invention also contain inorganic fillers as component (e). Examples of the inorganic fillers which may be used include glass beads, asbestos, glass fibers, glass flakes, milled glass, wollastonite, mica, talc, potassium titanate, clay, calcium carbonate, and silica. Glass fibers are preferred. The effect of the present invention may be further enhanced by treating these inorganic fillers with agents such as silanes (including amino silanes and epoxy silanes), titanates, or fatty acid compounds. This is usually done by pretreating the inorganic fillers with these agents, but it is also possible to add the inorganic fillers and the treating agents to the composition separately. When glass fibers are used as the inorganic fillers, it is preferable to use sizing agents having functional groups such as amino, epoxy, hydroxy, acid anhydride, carboxy, amide, imide, carboxylate ester, isocyanate, and/or oxazolinyl groups. Such pretreating agents and sizing agents may be used together.

The amount of inorganic fillers in the resin composition should be 5 to 150 wt. parts (preferably 10-100 wt. parts) per 100 wt. parts of components (a), (b), and (c).

In addition to the components described above, resin compositions in accordance with the present invention may optionally contain flame retardants. These flame retardants may be halogen compounds or phosphorus compounds.

Examples of halogen-containing flame retardants include brominated polystyrene, brominated poly(phenylene ethers), brominated polycarbonates, brominated epoxy resins, and brominated imides.

Examples of phosphate ester flame retardants include trimethyl phosphate, triethyl phosphate, tributyl phosphate, trioctyl phosphate, tributoxyethyl phosphate, triphenyl phosphate, tricresyl phosphate, cresyl phenyl phosphate, octyl diphenyl phosphate, diisopropyl phenyl phosphate, tris(chloroethyl) phosphate, tris(dichloropropyl) phosphate, tris(chloropropyl) phosphate, bis(2,3-dibromopropyl) 2,3-dichloropropyl phosphate, tris(2,3-dibromopropyl) phosphate, and bis(chloropropyl) monooctyl phosphate, as well as mixed esters such as bisphenol A bisphosphates, hydroquinone bisphosphates, resorcinol bisphosphates, and trihydroxybenzene trisphosphates containing methoxy, ethoxy, propoxy, or other alkoxy groups, or preferably phenoxy, methylphenoxy, substituted phenoxy, or substituted methylphenoxy groups. Preferred examples include triphenyl phosphate and the various bisphosphates.

The amount of such phosphate ester compounds added is preferably 0.01-40 wt. parts, most preferably 0.5-20 wt. parts, per 100 parts poly(phenylene sulfides).

For better impact strength, compositions in accordance with the present invention may also be blended with up to 80 wt. parts rubbers per 100 wt. parts of poly(phenylene sulfides), poly(phenylene ethers), and polyamides.

The rubbers may be natural or synthetic polymers which are elastomeric at room temperature. Examples include natural rubber, butadiene polymers, styrene-isoprene copolymers, butadiene-styrene copolymers (including random copolymers, block copolymers, and graft copolymers), isoprene polymers, chlorobutadiene polymers, butadiene-acrylonitrile copolymers, isobutylene polymers, isobutylene-butadiene copolymers, isobutylene-isoprene copolymers, acrylate ester copolymers, ethylene-propylene copolymers, ethylene-propylenediene copolymers, Thiokol rubbers, polysulfide rubbers, polyurethane rubbers, polyether rubbers [e.g., poly(propylene oxide)], and epichlorohydrin rubbers.

Resin compositions in accordance with the present invention may also contain other resins or additives introduced during compounding or fabrication in amounts which do not impair the desired properties of the composition. Such additives may include pigments, dyes, heat stabilizers, antioxidants, light stabilizers, lubricants, release agents, crystal nucleating agents, plasticizers, flow enhancers, and/or antistatic agents.

Compositions in accordance with the present invention are preferably prepared by melt kneading techniques. Small amounts of solvents may be used, although they are generally not necessary. The equipment used may be a Banbury mixer, mixing rolls, or a kneader, operating batchwise or continuously. There is no particular limitation on the order in which the components are mixed. The poly(phenylene sulfide), poly(phenylene ether), polyamide, compatibilizer, and inorganic filler may be mixed all at once; the poly(phenylene ether) may be premixed with the compatibilizer, then with the polyamide, and finally with the poly(phenylene sulfide) and inorganic filler; or the poly(phenylene ether), polyamide, and compatibilizer may be premixed, then combined with the poly(phenylene sulfide) and inorganic filler.

The present invention will now be described more concretely by means of some examples. In these examples, all parts are parts by weight.

The poly(phenylene sulfide) used was Tohprene T4 (trade mark of Tohprene Ltd.).

The poly(phenylene ether) used was Noryl (trade name of Nippon GE Plastics).

The following polyamides were used.
- PA-A:: copolymer of nylon 6 and nylon 12 (monomer mole ratio 80:20, trade name 7024B, from Ube Industries, [NH₂]= 5.3×10⁻⁶ eq/g, [COOH]=5.6×10⁻⁵ eq/g)
- PA-B:: copolymer of nylon 6 and nylon 12 (monomer mole ratio 60:40, trade name 7028B, from Ube Industries, [NH₂]= 2.8×10⁻⁶ eq/g, [COOH]=5.9×10⁻⁵ eq/g)
- PA-C:: Nylon 6/36 (trade named Priadit 2054, from Unichema Co.)
- PA-D:: Nylon 6 (from Ube Industries, [NH₂]=8.4×10⁻⁵ eq/g, [COOH]=1.8×10⁻⁶ eq/g, molecular weight 13,000)
- PA-E:: Grilamid TR 55 (from Mitsubishi Chemical Industries, a polyamide made up of the following monomers) 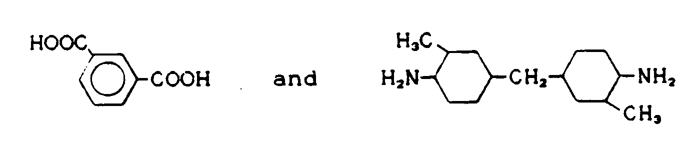
The compatibilizers used were RPS 1005 (trade name for a styrene copolymer with 5 wt% oxazoline derivative monomer, from Nippon Shokubai Kagaku Ltd.), and citric acid.

Glass fibers where used as the inorganic filler.

Triphenyl phosphate was used as the flame retardant.

Specimens were evaluated by means of the following test methods.

### Izod Impact Test

The notched Izod impact strength was measured by the ASTM D 256 standard method, using ⅛×½×2.5-inch test pieces.

### Trichloroethane Resistance

Each resin composition was injection molded to form an ADC connector, which was placed in a container of boiling trichloroethane (boiling point 74°C) at 80°C. After exposure to trichloroethane vapor for 1 minute, the surfaces of the molding were examined visually.

### Heat Resistance

Test pieces measuring 0.8 mm × 12.7 mm × 50 mm were conditioned at 23°C and 50% humidity for 24 hours, then placed in Fluorinert FC 71 (from Sumitomo 3M, boiling point 255°C) vapor for 1 minute, and their surfaces examined for blistering or other deformation.

### Fire Resistance (Flame Retardance)

Test pieces measuring 0.8 mm × 12.7 mm × 127 mm were tested for flame retardance by the UK [sic] 94 standard method. In the test results, the lower the V value, the better the flame retardance of the material.

### Examples 1-4, Comparisons 1-3

The amounts (wt. parts) of the poly(phenylene ether) and citric acid listed in the table were kneaded in a twin-screw extruder (screw diameter 50 mm) set at 320°C, and pelletized. The pellets were mixed with one of the polyamides, kneaded in the same extruder set at 280°C, and pelletized. The resulting pellets were in turn mixed with the poly(phenylene sulfide) and glass fibers (and with triphenyl phosphate in Example 4 and Comparison 3), kneaded in the same extruder set at 320°C, and pelletized. Those pellets were dried, then injection molded at 320°C into test pieces, and subjected to the various tests. The results are listed in the table.

### Comparison 4

The amounts (wt. parts) listed in the table of the poly(phenylene sulfide), poly(phenylene ether), glass fibers, and RPS 1005 were kneaded in a twin-screw extruder (screw diameter 50 mm) set at 320°C, and pelletized. The resulting pellets were dried, injection molded at 320°C to form test pieces, and tested. The results are listed in the table.

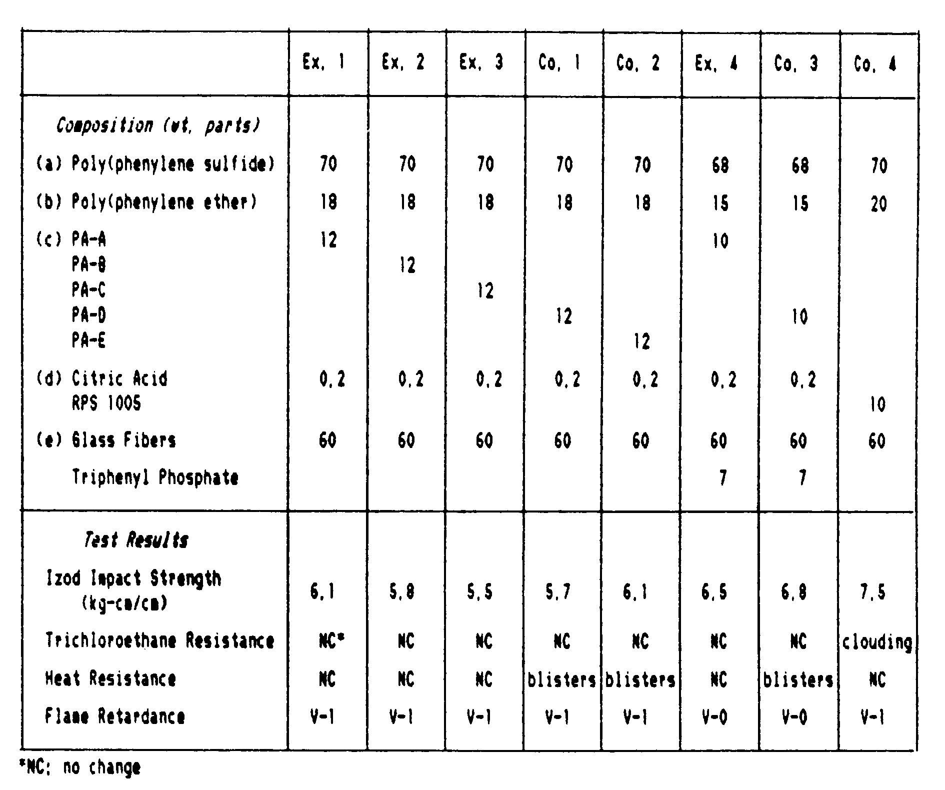

The present invention has made it possible to provide poly(phenylene sulfide) resin compositions with improved impact resistance, heat resistance, and appearance, which do not become deformed at high temperatures or show surface clouding when cleaned with chlorinated solvents.

## Claims

1. **.** Poly(phenylene sulfide) resin compositions consisting mainly of
(a) 40-90 wt% poly(phenylene sulfides),
(b) 5-55 wt% poly(phenylene ethers),
(c) 5-55 wt% polyamides,
(d) 0.01-10 wt. parts compatibilizers per 100 wt. parts of components (a), (b), and (c), and
(e) 5-150 wt. parts inorganic fillers per 100 wt. parts of components (a), (b), and (c),
characterized in that the polyamides are copolymers of nylon 6 and nylon 12, and/or nylon 6/36.

2. **.** Resin compositions as in claim 1, in which the compatibilizers (d) are one or more compounds selected from:
(a) citric acid, malic acid, agaricic acid, or derivatives thereof,
(b) compounds having both (i) carbon-carbon double or triple bonds, and (ii) carboxylic acid, acid anhydride, amide, imide, carboxylate ester, epoxy, amino, or hydroxy groups, or
(c) compounds having carboxylic acid or acid anhydride groups and acid halide groups.

3. **.** Resin compositions as in claim 1, in which the compatibilizers (d) are unsaturated monomers and/or polymers having epoxy groups and/or oxazolinyl groups.

## Patentansprüche

1. Poly(phenylensulfid)-Harz-Zusammensetzungen, bestehend in der Hauptsache aus
(a) 40-90 Gew.-% Poly(phenylensulfiden),
(b) 5-55 Gew.-% Poly(Phenylenäthern),
(c) 5-55 Gew.-% Polyamiden,
(d) 0,01-10 Gewichtsteilen verträglichmachende Mittel pro 100 Gewichtsteile der Komponenten (a), (b) und (c), und
(e) 5-150 Gewichtsteilen anorganische Füllstoffe pro 100 Gewichtsteile der Komponenten (a), (b) und (c),
dadurch gekennzeichnet, daß die Polyamide Copolymere von Nylon 6 und Nylon 12 und/oder Nylon 6/36 sind.

2. Harz-Zusammensetzungen wie in Anspruch 1, in welchen die verträglichmachenden Mittel (d) ein oder mehrere Verbindungen sind, ausgewählt aus:
(a) Zitronensäure, Äpfelsäure, Agaricinsäure oder Derivate derselben,
(b) Verbindungen, die sowohl enthalten (i) Kohlenstoff-Kohlenstoff-Doppel oder Dreifachbindungen und (ii) Carbonsäure-, Säureanhydrid-, Amid-, Imid-, Carboxylatester-, Epoxy-, Amino- oder Hydroxy-Gruppen, oder
(c) Verbindungen, welche Carbonsäure oder Säureanhydrid-Gruppen und Säurehalogenid-Gruppen aufweisen.

3. Harz-Zusammensetzungen wie in Anspruch 1, in welchen die verträglichmachenden Mittel (d) ungesättigte Monomere und/oder Polymere sind, die Epoxygruppen und/oder Oxazolinyl-Gruppen aufweisen.

## Revendications

1. Compositions de résine à base de poly(sulfure de phénylène), constituées principalement de :
(a) 40 à 90% en poids de poly(sulfure de phénylène),
(b) 5 à 55% en poids de poly(oxyde de phénylène),
(c) 5 à 55% en poids de polyamides,
(d) 0,01 à 10 parties en poids d'agents facilitant la compatibilité pour 100 parties en poids de constituants (a), (b) et (c), et
(e) 5 à 150 parties en poids de charges minérales pour 100 parties en poids de constituants (a), (b) et (c),
caractérisées en ce que les polyamides sont des copolymères de nylon 6 et de nylon 12 et/ou du nylon 6/36.

2. Compositions de résine selon la revendication 1, dans lesquelles les agents facilitant la compatibilité (d) sont constitués d'un ou plusieurs composés choisis parmi :
(a) l'acide citrique, l'acide malique, l'acide agaricique ou leurs dérivés,
(b) les composés possédant à la fois (i) une ou plusieurs doubles ou triples liaisons carbone-carbone, et (ii) un ou plusieurs groupes acide carboxylique, anhydride d'acide, amide, imide, ester carboxylate, époxy, amino ou hydroxy, ou
(c) les composés possédant un ou plusieurs groupes acide carboxylique ou anhydride d'acide, et un ou plusieurs groupes halogénure d'acide.

3. Compositions de résine selon la revendication 1, pour lesquelles les agents facilitant la compatibilité (d) sont des monomères insaturés et/ou des polymères possédant un ou plusieurs groupes époxy et/ou groupes oxazolinyle.
